# EUROPEAN PATENT APPLICATION

(11) **EP 3 457 793 A1**
(43) Date of publication of application: **20.03.2019**
(21) Application number: 16917194.9
(22) Date of filing: 29.09.2016
(51) Int. Cl.: H04W 72/08

(54) **INFORMATION TRANSMISSION METHOD, NETWORK DEVICE, AND TERMINAL DEVICE**

(71) Applicant: Guangdong OPPO Mobile Telecommunications Corp., Ltd., Guangdong 523860 (CN)
(72) Inventor: TANG, Hai, Dongguan Guangdong 523860 (CN); XU, Hua, Ottawa, Ontario K2M1N6 (CA)
(74) Representative: Manitz Finsterwald Patentanwälte PartmbB
(86) International application number: PCT/CN2016/100839
(87) International publication number: WO 2018/058440

(57) **Abstract**

The present invention discloses a method for transmitting information, a network device and a terminal device. The method includes: determining resource pool allocation information, where the resource pool allocation information includes resource information and association information of each of a plurality of resource pools of contention-based access resources; and sending the resource pool allocation information. The method for transmitting information, the network device and the terminal device of embodiments of the present invention can reduce the collision probability of contention-based data transmission.

## Description

### TECHNICAL FIELD

The present invention relates to the field of communications and, more particularly, to a method for transmitting information, a network device and a terminal device.

### BACKGROUND

Currently, a random access process is firstly required when a terminal device accesses a mobile communication system, and the random access process would cause a certain delay.

When the terminal device has only some small packets to be transmitted, an appropriate way is to adopt a contention-based manner, that is, the terminal device autonomously selects wireless resources to transmit the small packets to a network device, without the scheduling of the network device.

However, in the above process, collisions may occur among different terminal devices, that is, different terminal devices may select the same resources to transmit uplink data. Such collisions also affect access performance.

### SUMMARY

Embodiments of the present invention provide a method for transmitting information, a network device and a terminal device, which can reduce the collision probability of contention-based data transmission.

In a first aspect, a method for transmitting information is provided, which includes:
determining resource pool allocation information, where the resource pool allocation information includes resource information and association information of each of a plurality of resource pools of contention-based access resources; and
sending the resource pool allocation information.

The method for transmitting information according to the embodiment of the present invention allows different terminal devices to select resources from different resource pools via the resource pool allocation information, thereby reducing the collision probability of contention-based data transmission.

In some possible implementations, the determining the resource pool allocation information includes:
determining the resource pool allocation information according to a quality of service (QoS) level, where the association information includes information on a QoS level corresponding to each of the plurality of resource pools.

In some possible implementations, the method further includes:
adjusting a part of resources in a second resource pool of the plurality of resource pools to a first resource pool of the plurality of resource pools, when resources in the first resource pool are insufficient, where a QoS level corresponding to the first resource pool is higher than a QoS level corresponding to the second resource pool; and
sending first resource pool adjustment information, where the first resource pool adjustment information is used to indicate an adjustment of the first resource pool and the second resource pool.

In some possible implementations, the determining the resource pool allocation information includes:
determining the resource pool allocation information according to an application priority, where the association information includes information on an application priority corresponding to each of the plurality of resource pools.

In some possible implementations, the method further includes:
adjusting a part of resources in a fourth resource pool of the plurality of resource pools to a third resource pool of the plurality of resource pools, when resources in the third resource pool are insufficient, where an application priority corresponding to the third resource pool is higher than an application priority corresponding to the fourth resource pool; and
sending second resource pool adjustment information, where the second resource pool adjustment information is used to indicate an adjustment of the third resource pool and the fourth resource pool.

In some possible implementations, the association information includes information on a terminal device corresponding to each of the plurality of resource pools.

In some possible implementations, the determining the resource pool allocation information includes:
determining the resource pool allocation information according to received signal strength, where a difference between received signal strength corresponding to the terminal devices corresponding to a same resource pool is within a predetermined range.

In some possible implementations, the method further includes:
adjusting a quantity of terminal devices corresponding to a fifth resource pool of the plurality of resource pools or adjusting resources of the fifth resource pool according to a detection ratio corresponding to the fifth resource pool; and
sending third resource pool adjustment information, where the third resource pool adjustment information is used to indicate an adjustment of the fifth resource pool.

In some possible implementations, the adjusting a quantity of terminal devices corresponding to a fifth resource pool of the plurality of resource pools or adjusting resources of the fifth resource pool according to a detection ratio corresponding to the fifth resource pool includes:
if the detection ratio corresponding to the fifth resource pool is lower than a first predetermined value, reducing the quantity of the terminal devices corresponding to the fifth resource pool or increasing the resources of the fifth resource pool; or
if the detection ratio corresponding to the fifth resource pool is higher than a second predetermined value, increasing the quantity of the terminal devices corresponding to the fifth resource pool or reducing the resources of the fifth resource pool.

In some possible implementations, the method further includes:
adjusting a resource pool corresponding to a first terminal device according to an interference condition experienced by the first terminal device; and
sending fourth resource pool adjustment information, where the fourth resource pool adjustment information is used to indicate an adjustment of the resource pool corresponding to the first terminal device.

In some possible implementations, the adjusting a resource pool corresponding to a first terminal device according to an interference experienced by the first terminal device includes:
if interference experienced by the first terminal device is greater than a third predetermined value, adjusting the resource pool corresponding to the first terminal device or increasing resources of the resource pool corresponding to the first terminal device.

In some possible implementations, the method further includes:
receiving the interference condition that is experienced by the first terminal device and sent by the first terminal device.

In some possible implementations, the method further includes:
adjusting a resource pool corresponding to a second terminal device according to data traffic of the second terminal device; and
sending fifth resource pool adjustment information, where the fifth resource pool adjustment information is used to indicate an adjustment of the resource pool corresponding to the second terminal device.

In some possible implementations, the adjusting a resource pool corresponding to a second terminal device according to data traffic of the second terminal device includes:
if the data traffic of the second terminal device is greater than a fourth predetermined value, adjusting the resource pool corresponding to the second terminal device to a resource pool corresponding to a smaller quantity of terminal devices or increasing resources of the resource pool corresponding to the second terminal device; or
if the data traffic of the second terminal device is less than a fifth predetermined value, adjusting the resource pool corresponding to the second terminal device to a resource pool corresponding to a larger quantity of terminal devices or reducing the resources of the resource pool corresponding to the second terminal device.

In some possible implementations, the method further includes:
adjusting a resource pool corresponding to a third terminal device according to the number of attempted accesses of the third terminal device; and
sending sixth resource pool adjustment information, where the sixth resource pool adjustment information is used to indicate an adjustment of the resource pool corresponding to the third terminal device.

In some possible implementations, the adjusting a resource pool corresponding to a third terminal device according to the number of attempted accesses of the third terminal device includes:
if the number of attempted accesses of the third terminal device is greater than a sixth predetermined value, adjusting the resource pool corresponding to the third terminal device to a resource pool corresponding to a smaller quantity of terminal devices or increasing resources of the resource pool corresponding to the third terminal device; or
if data traffic of the third terminal device is less than a seventh predetermined value, adjusting the resource pool corresponding to the third terminal device to a resource pool corresponding to a larger quantity of terminal devices or reducing the resources of the resource pool corresponding to the third terminal device.

In some possible implementations, the method further includes:
receiving the number of attempted accesses of the third terminal device sent by the third terminal device.

In some possible implementations, the sending the resource pool allocation information includes:
sending the resource pool allocation information via broadcasting or high layer signaling.

In some possible implementations, resource pool adjustment information is sent via broadcasting or high layer signaling.

The methods for transmitting information according to the embodiments of the present invention can reduce the collision probability of the contention-based data transmission and improve the success rate of access by allocating a resource pool and dynamically adjusting the resource pool.

In a second aspect, a method for transmitting information is provided, which includes:
receiving resource pool allocation information sent by a network device, where the resource pool allocation information includes resource information and association information of each of a plurality of resource pools of contention-based access resources;
determining a resource pool corresponding to a first terminal device according to the resource pool allocation information; and
transmitting data over resources in the resource pool corresponding to the first terminal device.

The method for transmitting information according to the embodiment of the present invention can reduce the collision probability of the contention-based data transmission by determining a corresponding resource pool according to resource pool allocation information and selecting resources of the resource pool for data transmission.

In some possible implementations, the association information includes information on a quality of service (QoS) level corresponding to each of the plurality of resource pools; and
the determining a resource pool corresponding to a first terminal device according to the resource pool allocation information, including:
determining a resource pool corresponding to a QoS level of the first terminal device according to the resource pool allocation information.

In some possible implementations, the association information includes information on an application priority corresponding to each of the plurality of resource pool; and
the determining a resource pool corresponding to a first terminal device according to the resource pool allocation information includes:
determining a resource pool corresponding to an application priority of the first terminal device according to the resource pool allocation information.

In some possible implementations, the association information includes information on a terminal device corresponding to each of the plurality of resource pools.

In some possible implementations, the method further includes:
receiving resource pool adjustment information sent by the network device, where the resource pool adjustment information is used to indicate an adjustment of the resource pool corresponding to the first terminal device; and
determining a resource pool corresponding to the first terminal device according to the resource pool adjustment information.

The methods for transmitting information according to the embodiments of the present invention can reduce the collision probability of the contention-based data transmission and improve the success rate of access by determining a corresponding resource pool according to resource pool allocation information and resource pool adjustment information and selecting resources of the resource pool for data transmission.

In a third aspect, a network device is provided, which includes a module for executing the method according to the first aspect or any of the possible implementations of the first aspect.

In a fourth aspect, a terminal device is provided, which includes a module for executing the method according to the second aspect or any of the possible implementations of the second aspect.

In a fifth aspect, a network device is provided. The network device includes a processor, a memory and a communication interface. The processor is connected to the memory and the communication interface. The memory is configured to store instructions, and the processor is configured to execute the instructions. The communication interface is configured to communicate with other network elements under control of the processor. The processor is configured to execute the method according to the first aspect or any of the possible implementations of the first aspect when executing the instructions stored by the memory.

In a sixth aspect, a terminal device is provided. The terminal device includes a processor, a memory and a communication interface. The processor is connected to the memory and the communication interface. The memory is configured to store instructions, and the processor is configured to execute the instructions. The communication interface is configured to communicate with other network elements under control of the processor. The processor is configured to execute the method according to the second aspect or any of the possible implementations of the second aspect when executing the instructions stored by the memory.

In a seventh aspect, a computer readable medium for storing a computer program is provided, where the computer program includes instructions for executing the method according to the first aspect or any of the possible implementations of the first aspect.

In an eighth aspect, a computer readable medium for storing a computer program is provided, where the computer program includes instructions for executing the method according to the second aspect or any of the possible implementations of the second aspect.

### BRIEF DESCRIPTION OF DRAWINGS

In order to illustrate the technical solutions of embodiments of the present invention more clearly, the drawings used in the embodiments of the present invention will be briefly described below. It is obvious that the drawings in the following description are only some embodiments of the present invention; other drawings may be obtained by those of ordinary skill in the art without any creative efforts.
FIG. 1 is a schematic diagram of a communication system to which an embodiment of the present invention can be applied.
FIG. 2 is a schematic flowchart of a method for transmitting information according to an embodiment of the present invention.
FIG. 3 is a schematic flowchart of a method for transmitting information according to another embodiment of the present invention.
FIG. 4 is a schematic block diagram of a network device according to an embodiment of the present invention.
FIG. 5 is a schematic block diagram of a terminal device according to an embodiment of the present invention.
FIG. 6 is a schematic structural diagram of a network device according to another embodiment of the present invention.
FIG. 7 is a schematic structural diagram of a terminal device according to another embodiment of the present invention.

### DESCRIPTION OF EMBODIMENTS

The technical solutions of embodiments of the present invention will be clearly and comprehensively described in the following with reference to the accompanying drawings. It is obvious that the described embodiments are merely a part of, rather than all of, the embodiments of the present invention. All other embodiments obtained by those of ordinary skill in the art based on the embodiments of the present invention without creative efforts shall fall within the scope of the present invention.

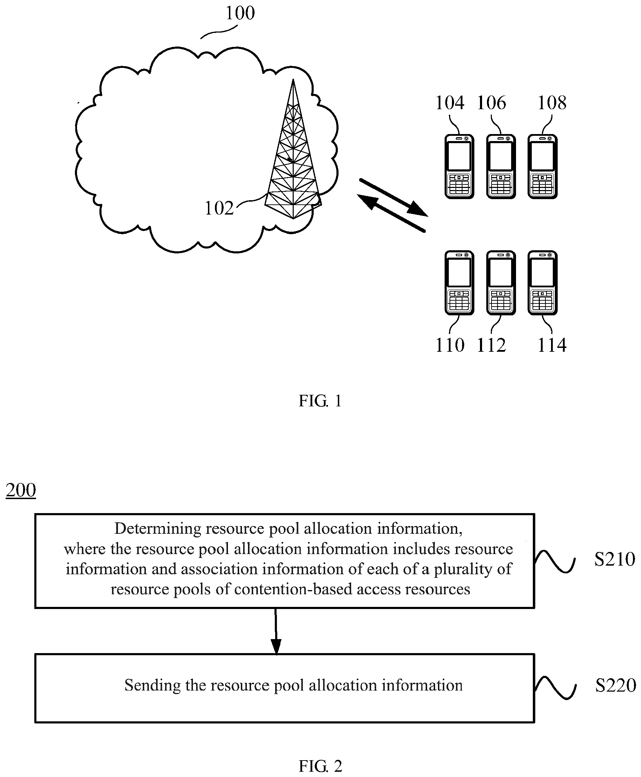

FIG. 1 is a schematic diagram of a communication system to which an embodiment of the present invention can be applied. As shown in FIG. 1, a network 100 may include a network device 102 and terminal devices 104, 106, 108, 110, 112, and 114, where the network device are wirelessly connected with the terminal device. It should be understood that FIG. 1 is illustrated by taking only a network including one network device as an example, but the embodiments of the present invention is not limited thereto. For example, the network may further include more network devices; similarly, the network may also include more terminals. The network device may also include other devices.

Various embodiments of the present invention are described in connection with a terminal device. The terminal device may also refer to user equipment (UE), an access terminal, a subscriber unit, a subscriber station, a mobile station, a mobile station, a remote station, a remote terminal, a mobile device, a user terminal, a terminal, a wireless communication device, a user agent or a user device. The access terminal may be a cellular phone, a cordless phone, a session initiation protocol (SIP) phone, a wireless local loop (WLL) station, a personal digital assistant (PDA), a handheld device or computing device with the wireless communication capability, or other processing device connected to a wireless modem, an in-vehicle device, a wearable device, a terminal device in a future 5G network, or a terminal device in a future evolved public land mobile network (PLMN), etc.

Various embodiments of the present invention are described in connection with a network device. The network device may be a device for communicating with the terminal device. The network device may be a base transceiver station (BTS) in GSM or CDMA, or a base station (NodeB, NB) in a WCDMA system, or an evolutional base station (Evolutional Node B, eNB or eNodeB) in an LTE system, or a wireless controller in a cloud radio access network (CRAN) scenario. Or, the network device may be a relay station, an access point, an in-vehicle device, a wearable device, a network device in a future 5G network, or a network device in a future evolved PLMN network.

In embodiments of the present invention, the term "resource" refers to a resource used for data transmission, and may include resources such as frequency domain resources, time domain resources, code domain resources, and sequences, which is not limited in the present invention.

In embodiments of the present invention, contention-based access resources are divided into a plurality of resource pools. The division of the resource pools may be based on different kinds of information, which is not limited in the present invention. Various embodiments are described in detail below.

FIG. 2 shows a schematic flowchart of a method 200 for transmitting information according to an embodiment of the present invention. The method 200 is executed by a network device, such as the network device 102 of FIG. 1. As shown in FIG. 2, the method 200 includes:
S210: determining resource pool allocation information, where the resource pool allocation information includes resource information and association information of each of a plurality of resource pools of contention-based access resources;
S220: sending the resource pool allocation information.

In an embodiment of the present invention, the network device divides the contention-based access resources into a plurality of resource pools, and sends the resource pool allocation information to a terminal device, so that the terminal device can determine a corresponding resource pool according to the resource pool allocation information and then select resources for data transmission. Since the contention-based access resources are divided into a plurality of resource pools, terminal devices corresponding to different resource pools will not select the same resource, thereby reducing the collision probability.

Therefore, the method for transmitting information according to the embodiment of the present invention allows different terminal devices to select resources from different resource pools via the resource pool allocation information, thereby reducing the collision probability of contention-based data transmission.

In an embodiment of the present invention, optionally, the network device can send the resource pool allocation information via broadcasting or high layer signaling.

It should be understood that the network device can also send the resource pool allocation information via other signaling, which is not limited by the present invention.

In an embodiment of the present invention, resource pools can be allocated in multiple ways. Accordingly, the resource pool allocation information can also have various forms.

Optionally, in an embodiment of the present invention, the network device can determine the resource pool allocation information according to a quality of service (QoS) level.

In this case, the association information can include information on a QoS level corresponding to each of the plurality of resource pools.

Specifically, in this embodiment, the network device can allocate a resource pool according to a QoS level. For example, there are three QoS levels for the current service, and the network device can allocate at least three resource pools and put access services with the same QoS into the same resource pool. Optionally, for a higher QoS level, the quantity of terminals allocated to the corresponding resource pool can be less, that is, resources in the resource pool can be more. The network device sends resource information of each resource pool and QoS level information corresponding to each resource pool to the terminal device. The terminal device can determine a corresponding resource pool according to the QoS level of its service, and then select resources for access.

Optionally, each terminal device can support services of different QoS levels, and the same terminal device can use different resource pools for uplink access based on a specific service.

Optionally, the network device can further adjust a resource pool according to the usage of the resource pool, and notify the terminal device of the adjustment.

Optionally, in an embodiment of the present invention, the network device can adjust a part of resources in a second resource pool of the plurality of resource pools to a first resource pool of the plurality of resource pools, when resources in the first resource pool are insufficient, where a QoS level corresponding to the first resource pool is higher than a QoS level corresponding to the second resource pool;
and send first resource pool adjustment information, where the first resource pool adjustment information is used to indicate an adjustment of the first resource pool and the second resource pool.

Specifically, when resources in a resource pool corresponding to a high QoS level are insufficient (for example, it can be determined according to a success rate of access), some resources can be scheduled from a resource pool with a low QoS level (for example, according to the order from low to high). Then the network device sends resource pool adjustment information to notify the terminal device of the resource pool adjustment.

Optionally, the resource pool adjustment information (including resource pool adjustment information in the following embodiments) can be sent via broadcasting or high layer signaling. It should be understood that the resource pool adjustment information can also be sent by other signaling, which is not limited by the present invention.

Optionally, in an embodiment of the present invention, the network device can determine the resource pool allocation information according to an application priority.

In this case, the association information includes information on an application priority corresponding to each of the plurality of resource pools.

Specifically, in this embodiment, the network device can allocate a resource pool according to an application priority. Optionally, the application priority can be determined according to requirements of an application for delay, traffic, specific class information, or a specific user terminal device. Optionally, after determining the application priorities, the network device allocates the resource pools and the size of each resource pool according to the order of the application priorities from high to low (where high priority indicates more important). For example, a resource pool corresponding to a high application priority can have more resources. The network device sends the resource information of each resource pool and the information on the application priority corresponding to each resource pool to the terminal device. The terminal device can determine a corresponding resource pool according to its application priority, and then select resources for access.

Optionally, in an embodiment of the present invention, the network device can adjust a part of resources in a fourth resource pool of the plurality of resource pools to a third resource pool of the plurality of resource pools, when resources in the third resource pool are insufficient, where an application priority corresponding to the third resource pool is higher than an application priority corresponding to the fourth resource pool;
and send second resource pool adjustment information, where the second resource pool adjustment information is used to indicate an adjustment of the third resource pool and the fourth resource pool.

Specifically, when a resource pool corresponding to a high application priority is insufficient (for example, it can be determined according to a success rate of access), some resources can be scheduled from a resource pool corresponding to a low application priority (for example, according to the order from low to high). Then the network device sends resource pool adjustment information to notify the terminal device of the resource pool adjustment.

Optionally, in an embodiment of the present invention, the association information can include information on a terminal device corresponding to each of the plurality of resource pools.

That is to say, in this embodiment, the resource pool allocation information can include resource information of each resource pool and information on a terminal device corresponding to each resource pool.

Information on a terminal device can be an identifier of the terminal device, but the present invention is not limited thereto.

Optionally, which terminal device corresponds to which resource pool can be determined according to various manners, which is not limited by the present invention. For example, it can be determined according to conditions such as priority, location information, or signal strength of the terminal device.

Optionally, in an embodiment of the present invention, the network device can determine the resource pool allocation information according to received signal strength, where the difference between received signal strength corresponding to terminal devices corresponding to the same resource pool is within a predetermined range.

Specifically, the network device can allocate a resource pool according to received signal strength of receiving a transmission signal of a terminal device, and divide terminal devices with similar received signal strength into a resource pool to ensure that a terminal device with weak signal strength will not overwhelmed by terminal devices with strong signal strength. Optionally, terminal devices can also substantially control the transmit power of access signals according to downlink path loss, so as to ensure that the access signals received by the network device substantially maintain similar signal strength.

Optionally, in an embodiment of the present invention, the network device can further adjust the quantity of terminal devices corresponding to a fifth resource pool of the plurality of resource pools or adjust resources of the fifth resource pool according to a detection ratio corresponding to the fifth resource pool;
and send third resource pool adjustment information, where the third resource pool adjustment information is used to indicate an adjustment of the fifth resource pool.

Specifically, the network device can dynamically adjust a resource pool. The resource pool can be adjusted by adjusting the quantity of the terminal devices in the resource pool or adjusting the resources of the resource pool. For example, the quantity of the terminal devices in the resource pool or the resources of the resource pool can be adjusted according to a detection ratio corresponding to the resource pool or according to the detection ratio corresponding to the resource pool in combination with received signal strength corresponding to the resource pool.

Optionally, as an embodiment of the present invention, if the detection ratio corresponding to the fifth resource pool is lower than a first predetermined value, reduce the quantity of the terminal devices corresponding to the fifth resource pool or increase the resources of the fifth resource pool; or
if the detection ratio corresponding to the fifth resource pool is higher than a second predetermined value, increase the quantity of the terminal devices corresponding to the fifth resource pool or reduce the resources of the fifth resource pool.

In other words, if a detection ratio corresponding to a certain resource pool is relatively low (or corresponding received signal strength is relatively high, a corresponding detection ratio is relatively low), reduce the quantity of the terminal devices corresponding to the resource pool or increase the resources of the resource pool; or
if a detection ratio corresponding to a resource pool is relatively high, increase the quantity of the terminal devices corresponding to the resource pool or reduce the resources of the resource pool.

Optionally, in an embodiment of the present invention, the network device can further adjust a resource pool corresponding to a first terminal device according to an interference condition experienced by the first terminal device;
and send fourth resource pool adjustment information, where the fourth resource pool adjustment information is used to indicate an adjustment of the resource pool corresponding to the first terminal device.

Specifically, the network device can adjust a resource pool corresponding to a terminal device according to an interference condition experienced by the terminal device.

Optionally, if interference experienced by the first terminal device is greater than a third predetermined value, adjust the resource pool corresponding to the first terminal device or increase resources of the resource pool corresponding to the first terminal device.

That is to say, the network device can determine which terminal device is experiencing relatively large interference according to the interference condition experienced by the terminal device, and then allocate the terminal device to another resource pool.

Optionally, the network device can receive the interference condition that is experienced by the first terminal device and sent by the first terminal device.

Optionally, in an embodiment of the present invention, the network device can further adjust a resource pool corresponding to a second terminal device according to data traffic of the second terminal device;
and send fifth resource pool adjustment information, where the fifth resource pool adjustment information is used to indicate an adjustment of the resource pool corresponding to the second terminal device.

Specifically, the network device can allocate a resource pool according to data traffic of a terminal device, and adjust the resource pool.

Optionally, if the data traffic of the second terminal device is greater than a fourth predetermined value, adjust the resource pool corresponding to the second terminal device to a resource pool corresponding to a smaller quantity of terminal devices or increase resources of the resource pool corresponding to the second terminal device; or
if the data traffic of the second terminal device is less than a fifth predetermined value, adjust the resource pool corresponding to the second terminal device to a resource pool corresponding to a larger quantity of terminal devices or reduce the resources of the resource pool corresponding to the second terminal device.

That is to say, for a terminal device with larger data traffic, more resources can be provided, for example, the terminal device can be allocated to a resource pool with a smaller quantity of terminal devices, or resources of a resource pool corresponding to the terminal device can be increased. On the contrary, for a terminal device with smaller traffic data, fewer resources can be provided, for example, the terminal device can be allocated to a resource pool with a larger quantity of terminal devices, or resources of a resource pool corresponding to the terminal device can be reduced.

Optionally, in an embodiment of the present invention, the network device can further adjust a resource pool corresponding to a third terminal device according to the number of attempted accesses of the third terminal device;
and send sixth resource pool adjustment information, where the sixth resource pool adjustment information is used to indicate an adjustment of the resource pool corresponding to the third terminal device.

Specifically, the network device can allocate a resource pool according to the number of attempted accesses of a terminal device, and adjust the resource pool.

Optionally, if the number of attempted accesses of the third terminal device is greater than a sixth predetermined value, adjust the resource pool corresponding to the third terminal device to a resource pool corresponding to a smaller quantity of terminal devices or increase resources of the resource pool corresponding to the third terminal device; or
if data traffic of the third terminal device is less than a seventh predetermined value, adjust the resource pool corresponding to the third terminal device to a resource pool corresponding to a larger quantity of terminal devices or reduce the resources of the resource pool corresponding to the third terminal device.

That is to say, for a terminal device with a larger number of attempted accesses, more resources can be provided, for example, the terminal device can be allocated to a resource pool with a smaller quantity of terminal devices, or resources of a resource pool corresponding to the terminal device can be increased. On the contrary, for a terminal device with a smaller number of attempted accesses, fewer resources can be provided, for example, the terminal device can be allocated to a resource pool with a larger quantity of terminal devices, or resources of a resource pool corresponding to the terminal device can be reduced.

Optionally, the network device can receive the number of attempted accesses of the third terminal device sent by the third terminal device.

For example, the terminal device can attach the number of attempted accesses to an uplink signal and transmit it to the network device.

Optionally, the network device can also allocate a plurality resource pools for a terminal device as standby resource pools. If the terminal device failed with multiple times of attempted accesses in one resource pool, it can switch to another resource pool to continue the attempt.

The methods for transmitting information according to the embodiments of the present invention can reduce the collision probability of the contention-based data transmission and improve the success rate of access by allocating a resource pool and dynamically adjusting the resource pool.

The methods for transmitting information according to the embodiments of the present invention is described above from the network device side, and the methods for transmitting information according to the embodiments of the present invention is described below from the terminal device side.

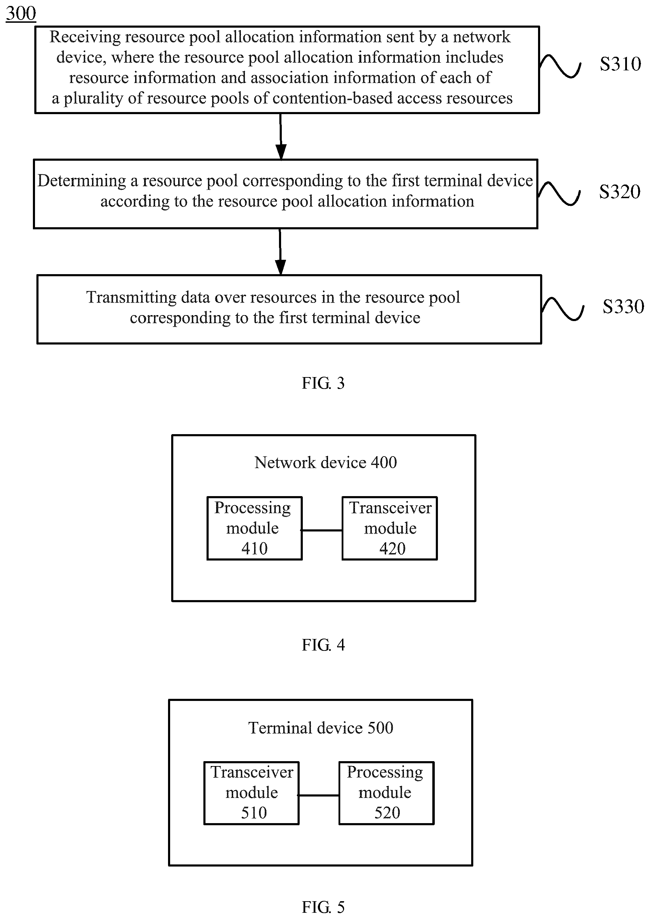

FIG. 3 shows a schematic flowchart of a method 300 for transmitting information according to an embodiment of the present invention. The method 300 is executed by a terminal device (hereinafter referred to as a first terminal device), such as the terminal device of FIG. 1. As shown in FIG. 3, the method 300 includes:
S310: receiving resource pool allocation information sent by a network device, where the resource pool allocation information includes resource information and association information of each of a plurality of resource pools of contention-based access resources;
S320: determining a resource pool corresponding to the first terminal device according to the resource pool allocation information;
S330: transmitting data over resources in the resource pool corresponding to the first terminal device.

In an embodiment of the present invention, the network device divides the contention-based access resources into a plurality of resource pools, and sends the resource pool allocation information to the terminal device, so that the terminal device can determine a corresponding resource pool according to the resource pool allocation information and then select resources for data transmission. Since the contention-based access resources are divided into a plurality of resource pools, terminal devices corresponding to different resource pools will not select the same resource, thereby reducing the collision probability.

Therefore, the method for transmitting information according to the embodiment of the present invention can reduce the collision probability of the contention-based data transmission by determining a corresponding resource pool according to resource pool allocation information and selecting resources of the resource pool for data transmission.

Optionally, in an embodiment of the present invention, the association information includes information on a quality of service (QoS) level corresponding to each of the plurality of resource pools;
the first terminal device can determine a resource pool corresponding to a QoS level of the first terminal device according to the resource pool allocation information.

Optionally, in an embodiment of the present invention, the association information includes information on an application priority corresponding to each of the plurality of resource pool;
the first terminal device can determine a resource pool corresponding to an application priority of the first terminal device according to the resource pool allocation information.

Optionally, in an embodiment of the present invention, the association information includes information on a terminal device corresponding to each of the plurality of resource pools.

Optionally, in an embodiment of the present invention, the first terminal device can further receive resource pool adjustment information sent by the network device, where the resource pool adjustment information is used to indicate an adjustment of the resource pool corresponding to the first terminal device;
determine a resource pool corresponding to the first terminal device according to the resource pool adjustment information.

The methods for transmitting information according to the embodiments of the present invention can reduce the collision probability of the contention-based data transmission and improve the success rate of access by determining a corresponding resource pool according to resource pool allocation information and resource pool adjustment information and selecting resources of the resource pool for data transmission.

It should be understood that, in the embodiments of the present invention, the interaction between a network device and a terminal device as described for the network device side as well as related features, functions, and the like are corresponding to the description for the terminal device side. For brevity, details will not be repeated here.

It should be understood that, in various embodiments of the present invention, the sequence numbers in the above processes does not refer to the exact executing order. The executing order of respective processes should be determined by its functions and internal logic, but should not be construed as limiting the implementations of embodiments of the present invention.

The methods for transmitting information according to the embodiments of the present invention are described in detail above, and a network device and a terminal device according to embodiments of the present invention will be described below. It should be understood that the network device and the terminal device in the embodiments of the present invention can execute various methods according to the foregoing embodiments of the present invention, that is, for specific working processes of the following various devices, reference may be made to the corresponding processes in the foregoing method embodiments.

FIG. 4 shows a schematic block diagram of a network device 400 according to an embodiment of the present invention. As shown in FIG. 4, the network device 400 includes:
a processing module 410, configured to determine resource pool allocation information, where the resource pool allocation information includes resource information and association information of each of a plurality of resource pools of contention-based access resources;
a transceiver module 420, configured to send the resource pool allocation information.

The network device in the embodiment of the present invention allows different terminal devices to select resources from different resource pools via the resource pool allocation information, thereby reducing the collision probability of contention-based data transmission.

Optionally, in an embodiment of the present invention, the processing module 410 is specifically configured to:
determine the resource pool allocation information according to a quality of service (QoS) level,
where the association information includes information on a QoS level corresponding to each of the plurality of resource pools.

Optionally, in an embodiment of the present invention, the processing module 410 is further configured to: adjust a part of resources in a second resource pool of the plurality of resource pools to a first resource pool of the plurality of resource pools, when resources in the first resource pool are insufficient, where a QoS level corresponding to the first resource pool is higher than a QoS level corresponding to the second resource pool;
the transceiver module 420 is further configured to send first resource pool adjustment information, where the first resource pool adjustment information is used to indicate an adjustment of the first resource pool and the second resource pool.

Optionally, in an embodiment of the present invention, the processing module 410 is specifically configured to:
determine the resource pool allocation information according to an application priority,
where the association information includes information on an application priority corresponding to each of the plurality of resource pools.

Optionally, in an embodiment of the present invention, the processing module 410 is further configured to: adjust a part of resources in a fourth resource pool of the plurality of resource pools to a third resource pool of the plurality of resource pools, when resources in the third resource pool are insufficient, where an application priority corresponding to the third resource pool is higher than an application priority corresponding to the fourth resource pool;
the transceiver module 420 is further configured to send second resource pool adjustment information, where the second resource pool adjustment information is used to indicate an adjustment of the third resource pool and the fourth resource pool.

Optionally, in an embodiment of the present invention, the association information includes information on a terminal device corresponding to each of the plurality of resource pools.

Optionally, in an embodiment of the present invention, the processing module 410 is specifically configured to:
determine the resource pool allocation information according to received signal strength, where the difference between received signal strength corresponding to terminal devices corresponding to the same resource pool is within a predetermined range.

Optionally, in an embodiment of the present invention, the processing module 410 is further configured to: adjust the quantity of terminal devices corresponding to a fifth resource pool of the plurality of resource pools or adjust resources of the fifth resource pool according to a detection ratio corresponding to the fifth resource pool;
the transceiver module 420 is further configured to send third resource pool adjustment information, where the third resource pool adjustment information is used to indicate an adjustment of the fifth resource pool.

Optionally, in an embodiment of the present invention, the processing module 410 is specifically configured to:
if the detection ratio corresponding to the fifth resource pool is lower than a first predetermined value, reduce the quantity of the terminal devices corresponding to the fifth resource pool or increase the resources of the fifth resource pool; or
if the detection ratio corresponding to the fifth resource pool is higher than a second predetermined value, increase the quantity of the terminal devices corresponding to the fifth resource pool or reduce the resources of the fifth resource pool.

Optionally, in an embodiment of the present invention, the processing module 410 is further configured to: adjust a resource pool corresponding to a first terminal device according to an interference condition experienced by the first terminal device;
the transceiver module 420 is further configured to send fourth resource pool adjustment information, where the fourth resource pool adjustment information is used to indicate an adjustment of the resource pool corresponding to the first terminal device.

Optionally, in an embodiment of the present invention, the processing module 410 is specifically configured to:
if interference experienced by the first terminal device is greater than a third predetermined value, adjust the resource pool corresponding to the first terminal device or increase resources of the resource pool corresponding to the first terminal device.

Optionally, in an embodiment of the present invention, the transceiver module 420 is further configured to receive the interference condition that is experienced by the first terminal device and sent by the first terminal device.

Optionally, in an embodiment of the present invention, the processing module 410 is further configured to: adjust a resource pool corresponding to a second terminal device according to data traffic of the second terminal device;
the transceiver module 420 is further configured to send fifth resource pool adjustment information, where the fifth resource pool adjustment information is used to indicate an adjustment of the resource pool corresponding to the second terminal device.

Optionally, in an embodiment of the present invention, the processing module 410 is specifically configured to:
if the data traffic of the second terminal device is greater than a fourth predetermined value, adjust the resource pool corresponding to the second terminal device to a resource pool corresponding to a smaller quantity of terminal devices or increase resources of the resource pool corresponding to the second terminal device; or
if the data traffic of the second terminal device is less than a fifth predetermined value, adjust the resource pool corresponding to the second terminal device to a resource pool corresponding to a larger quantity of terminal devices or reduce the resources of the resource pool corresponding to the second terminal device.

Optionally, in an embodiment of the present invention, the processing module 410 is further configured to: adjust a resource pool corresponding to a third terminal device according to the number of attempted accesses of the third terminal device;
the transceiver module 420 is further configured to send sixth resource pool adjustment information, where the sixth resource pool adjustment information is used to indicate an adjustment of the resource pool corresponding to the third terminal device.

Optionally, in an embodiment of the present invention, the processing module 410 is specifically configured to:
if the number of attempted accesses of the third terminal device is greater than a sixth predetermined value, adjust the resource pool corresponding to the third terminal device to a resource pool corresponding to a smaller quantity of terminal devices or increase resources of the resource pool corresponding to the third terminal device; or
if data traffic of the third terminal device is less than a seventh predetermined value, adjust the resource pool corresponding to the third terminal device to a resource pool corresponding to a larger quantity of terminal devices or reduce the resources of the resource pool corresponding to the third terminal device.

Optionally, in an embodiment of the present invention, the transceiver module 420 is further configured to receive the number of attempted accesses of the third terminal device sent by the third terminal device.

Optionally, in an embodiment of the present invention, the transceiver module 420 is specifically configured to send the resource pool allocation information via broadcasting or high layer signaling.

The network device in the embodiments of the present invention can reduce the collision probability of contention-based data transmission and improve the success rate of access by allocating a resource pool and dynamically adjusting the resource pool.

The network device 400 according to the embodiments of the present invention can correspond to the network device in the methods of transmitting information according to the embodiments of the present invention, and the above-described and other operations and/or functions of respective modules in the network device 400 respectively implement the corresponding processes in the foregoing various methods, and will not be repeated here for brevity.

FIG. 5 shows a schematic block diagram of a terminal device 500 according to an embodiment of the present invention. As shown in FIG. 5, the terminal device 500 includes:
a transceiver module 510, configured to receive resource pool allocation information sent by a network device, where the resource pool allocation information includes resource information and association information of each of a plurality of resource pools of contention-based access resources;
a processing module 520, configured to determine a resource pool corresponding to the terminal device according to the resource pool allocation information, and transmit data over resources in the resource pool corresponding to the terminal device.

The network device in the embodiment of the present invention can reduce the collision probability of contention-based data transmission by determining a corresponding resource pool according to resource pool allocation information and selecting resources of the resource pool for data transmission.

Optionally, in an embodiment of the present invention, the association information includes information on a quality of service (QoS) level corresponding to each of the plurality of resource pools;
the processing module 520 is configured to determine a resource pool corresponding to a QoS level of the terminal device according to the resource pool allocation information.

Optionally, in an embodiment of the present invention, the association information includes information on an application priority corresponding to each of the plurality of resource pools;
the processing module 520 is specifically configured to determine a resource pool corresponding to an application priority of the terminal device according to the resource pool allocation information.

Optionally, in an embodiment of the present invention, the association information includes information on a terminal device corresponding to each of the plurality of resource pools.

Optionally, in an embodiment of the present invention, the transceiver module 510 is further configured to receive resource pool adjustment information sent by the network device, where the resource pool adjustment information is used to indicate an adjustment of the resource pool corresponding to the terminal device;
the processing module 520 is further configured to determine a resource pool corresponding to the terminal device according to the resource pool adjustment information.

The terminal device according to the embodiments of the present invention can reduce the collision probability of contention-based data transmission and improve the success rate of access by determining a corresponding resource pool according to resource pool allocation information and the resource pool adjustment information and selecting resources of the resource pool for data transmission.

The terminal device 500 according to the embodiments of the present invention can correspond to the terminal device in the methods of transmitting information according to the embodiments of the present invention, and the above-described and other operations and/or functions of respective modules in the terminal device 500 respectively implement the corresponding processes in the foregoing various methods, and will not be repeated here for brevity.

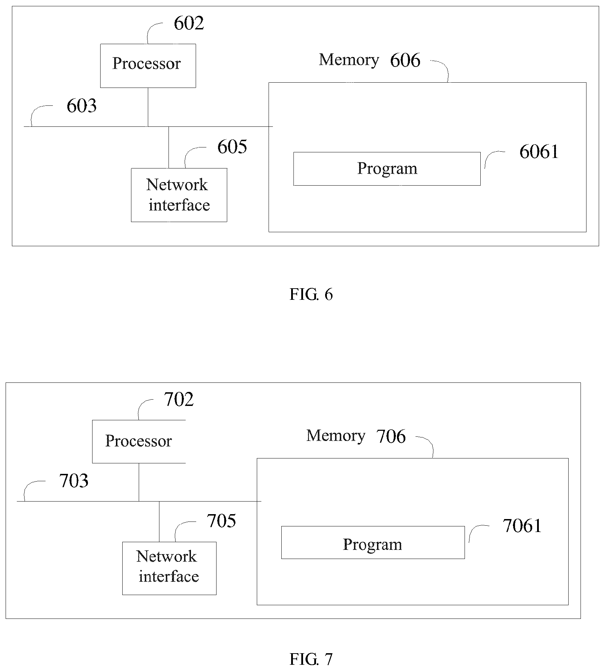

FIG. 6 shows a structure of a network device according to another embodiment of the present invention, including at least one processor 602 (such as a CPU), at least one network interface 605 or other communication interface, a memory 606, and at least one communication bus 603, which is configured to achieve connection communication between these components. The processor 602 is configured to execute an executable module, such as a computer program, stored in the memory 606. The memory 606 may include a high speed random access memory (RAM: Random Access Memory), and may further include a non-volatile memory such as at least one disk memory. A communication connection with at least one other network element is achieved by the at least one network interface 605 (which can be wired or wireless).

In some implementations, the memory 606 stores a program 6061, and the processor 602 executes the program 6061 for executing the methods in the various embodiments of the present invention described above.

FIG. 7 shows a structure of an MME according to another embodiment of the present invention, including at least one processor 702 (such as a CPU), at least one network interface 705 or other communication interface, a memory 706, and at least one communication bus 703, which is configured to achieve connection communication between these components. The processor 702 is configured to execute an executable module, such as a computer program, stored in the memory 706. The memory 706 may include a high speed random access memory (RAM: Random Access Memory), and may further include a non-volatile memory such as at least one disk memory. A communication connection with at least one other network element is achieved by the at least one network interface 705 (which can be wired or wireless).

In some implementations, the memory 706 stores a program 7061, and the processor 702 executes the program 7061 for executing the methods in the various embodiments of the present invention described above.

It should be understood that, the specific examples in the embodiments of the present invention are only intended to help those skilled in the art to better understand the embodiments of the present invention, and are not intended to limit the scope of the embodiments of the present invention.

It should be understood that the term "and/or" herein is merely an association relationship describing associated objects, and indicates that there can be three relationships. For example, A and/or B can indicate: presence of A only, presence of both A and B and presence of B only. In addition, the character "/" herein generally indicates an "or" relationship between contextual objects.

Those of ordinary skill in the art will appreciate that the units and algorithm steps of the various examples described in conjunction with the embodiments disclosed herein can be implemented in electronic hardware, computer software, or a combination thereof. In order to clearly illustrate the interchangeability of the hardware and the software, the constitution and steps of the various examples have been generally described in terms of functions in the above description. Whether these functions are executed in hardware or software depends on the specific application and design constraints of the solution. Those skilled in the art can use different methods for implementing the described functions for each particular application, but such implementation should not be considered to be beyond the scope of the present invention.

Those of ordinary skill in the art can clearly understand that, for convenience and brevity of the description, regarding specific operation processes of the systems, the apparatuses and the units described above, reference may be made to the corresponding processes in the above method embodiments, and details will not be repeated here.

In the embodiments provided in the present application, it should be understood that the disclosed systems, apparatuses, and methods may be implemented in other manners. For example, the apparatus embodiments described above are merely illustrative. For example, the division of the units is only a logical function division. In an actual implementation, there may be another division manner. For example, multiple units or components may be combined or may be integrated into another system, or some features may be ignored or not executed. In addition, a coupling or direct coupling or communication connection as shown or discussed may be an indirect coupling or communication connection through some interfaces, apparatuses or units, and may be electrical, mechanical or otherwise.

The units described as separate components may be or may not be physically separated, and the components shown as units may be or may not be physical units, that is, may be located in one place, or may be distributed to multiple network units. Some or all of the units may be selected according to actual needs to achieve the purpose of the solutions of the embodiments of the present invention.

In addition, the functional units in the embodiments of the present invention may be integrated into one processing unit, or each of the units may exist alone physically, or two or more units may be integrated in one unit. The above integrated unit can be implemented in the form of hardware or in the form of a software functional unit.

The integrated unit may be stored in a computer readable storage medium if it is implemented in the form of a software functional unit and sold or used as a standalone product. Based on such understanding, the essence of the technical solution of the present invention, or a part of the technical solution of the present invention contributing to the prior art, or all or a part of the technical solution may be embodied in the form of a software product which is stored in a storage medium, including several instructions for enabling a computer device (which may be a personal computer, a server, or a network device, or the like) to execute all or part of the steps of the methods described in the embodiments of the present invention. The above storage medium includes: various mediums capable of storing program codes, such as a USB flash disk, a mobile hard disk, a read-only memory (Read-Only Memory, ROM), a random access memory (Random Access Memory, RAM), a magnetic disk, an optical disk, or the like.

The above description is only specific embodiments of the present invention, but the protection scope of the present invention is not limited thereto. Various equivalent modifications or substitutions can be easily conceived by those skilled in the art within the technical scope of the present invention, and should be covered in the protection scope of the present invention. Therefore, the protection scope of the present invention should be subject to the protection scope of claims.

## Claims

1. A method for transmitting information, comprising:
determining resource pool allocation information, wherein the resource pool allocation information comprises resource information and association information of each of a plurality of resource pools of contention-based access resources; and
sending the resource pool allocation information.

2. The method according to claim 1, wherein the determining the resource pool allocation information comprises:
determining the resource pool allocation information according to a quality of service, QoS, level, wherein the association information comprises information on a QoS level corresponding to each of the plurality of resource pools.

3. The method according to claim 2, wherein the method further comprises:
adjusting a part of resources in a second resource pool of the plurality of resource pools to a first resource pool of the plurality of resource pools, when resources in the first resource pool are insufficient, wherein a QoS level corresponding to the first resource pool is higher than a QoS level corresponding to the second resource pool; and
sending first resource pool adjustment information, wherein the first resource pool adjustment information is used to indicate an adjustment of the first resource pool and the second resource pool.

4. The method according to claim 1, wherein the determining the resource pool allocation information comprises:
determining the resource pool allocation information according to an application priority, wherein the association information comprises information on an application priority corresponding to each of the plurality of resource pools.

5. The method according to claim 4, wherein the method further comprises:
adjusting a part of resources in a fourth resource pool of the plurality of resource pools to a third resource pool of the plurality of resource pools, when resources in the third resource pool are insufficient, wherein an application priority corresponding to the third resource pool is higher than an application priority corresponding to the fourth resource pool; and
sending second resource pool adjustment information, wherein the second resource pool adjustment information is used to indicate an adjustment of the third resource pool and the fourth resource pool.

6. The method according to claim 1, wherein the association information comprises information on a terminal device corresponding to each of the plurality of resource pools.

7. The method according to claim 6, wherein the determining the resource pool allocation information comprises:
determining the resource pool allocation information according to received signal strength, wherein a difference between received signal strength corresponding to terminal devices corresponding to a same resource pool is within a predetermined range.

8. The method according to claim 6, wherein the method further comprises:
adjusting a quantity of terminal devices corresponding to a fifth resource pool of the plurality of resource pools or adjusting resources of the fifth resource pool according to a detection ratio corresponding to the fifth resource pool; and
sending third resource pool adjustment information, wherein the third resource pool adjustment information is used to indicate an adjustment of the fifth resource pool.

9. The method according to claim 8, wherein the adjusting a quantity of terminal devices corresponding to a fifth resource pool of the plurality of resource pools or adjusting resources of the fifth resource pool according to a detection ratio corresponding to the fifth resource pool comprises:
if the detection ratio corresponding to the fifth resource pool is lower than a first predetermined value, reducing the quantity of the terminal devices corresponding to the fifth resource pool or increasing the resources of the fifth resource pool; or
if the detection ratio corresponding to the fifth resource pool is higher than a second predetermined value, increasing the quantity of the terminal devices corresponding to the fifth resource pool or reducing the resources of the fifth resource pool.

10. The method according to claim 6, wherein the method further comprises:
adjusting a resource pool corresponding to a first terminal device according to an interference condition experienced by the first terminal device; and
sending fourth resource pool adjustment information, wherein the fourth resource pool adjustment information is used to indicate an adjustment of the resource pool corresponding to the first terminal device.

11. The method according to claim 10, wherein the adjusting a resource pool corresponding to a first terminal device according to an interference condition experienced by the first terminal device comprises:
if interference experienced by the first terminal device is greater than a third predetermined value, adjusting the resource pool corresponding to the first terminal device or increasing resources of the resource pool corresponding to the first terminal device.

12. The method according to claim 10 or 11, wherein the method further comprises:
receiving the interference condition that is experienced by the first terminal device and sent by the first terminal device.

13. The method according to claim 6, wherein the method further comprises:
adjusting a resource pool corresponding to a second terminal device according to data traffic of the second terminal device; and
sending fifth resource pool adjustment information, wherein the fifth resource pool adjustment information is used to indicate an adjustment of the resource pool corresponding to the second terminal device.

14. The method according to claim 13, wherein the adjusting a resource pool corresponding to a second terminal device according to data traffic of the second terminal device comprises:
if the data traffic of the second terminal device is greater than a fourth predetermined value, adjusting the resource pool corresponding to the second terminal device to a resource pool corresponding to a smaller quantity of terminal devices or increasing resources of the resource pool corresponding to the second terminal device; or
if the data traffic of the second terminal device is less than a fifth predetermined value, adjusting the resource pool corresponding to the second terminal device to a resource pool corresponding to a larger quantity of terminal devices or reducing the resources of the resource pool corresponding to the second terminal device.

15. The method according to claim 6, wherein the method further comprises:
adjusting a resource pool corresponding to a third terminal device according to the number of attempted accesses of the third terminal device; and
sending sixth resource pool adjustment information, wherein the sixth resource pool adjustment information is used to indicate an adjustment of the resource pool corresponding to the third terminal device.

16. The method according to claim 15, wherein the adjusting the adjusting a resource pool corresponding to a third terminal device according to the number of attempted accesses of the third terminal device comprises:
if the number of attempted accesses of the third terminal device is greater than a sixth predetermined value, adjusting the resource pool corresponding to the third terminal device to a resource pool corresponding to a smaller quantity of terminal devices or increasing resources of the resource pool corresponding to the third terminal device; or
if data traffic of the third terminal device is less than a seventh predetermined value, adjusting the resource pool corresponding to the third terminal device to a resource pool corresponding to a larger quantity of terminal devices or reducing the resources of the resource pool corresponding to the third terminal device.

17. The method according to claim 15 or 16, wherein the method further comprises:
receiving the number of attempted accesses of the third terminal device sent by the third terminal device.

18. The method according to any one of claims 1 to 17, wherein the sending the resource pool allocation information comprises:
sending the resource pool allocation information via broadcasting or high layer signaling.

19. A method for transmitting information, comprising:
receiving resource pool allocation information sent by a network device, wherein the resource pool allocation information comprises resource information and association information of each of a plurality of resource pools of contention-based access resources;
determining a resource pool corresponding to a first terminal device according to the resource pool allocation information; and
transmitting data over resources in the resource pool corresponding to the first terminal device.

20. The method according to claim 19, wherein the association information comprises information on a quality of service, QoS, level corresponding to each of the plurality of resource pools; and
the determining a resource pool corresponding to a first terminal device according to the resource pool allocation information comprises:
determining a resource pool corresponding to a QoS level of the first terminal device according to the resource pool allocation information.

21. The method according to claim 19, wherein the association information comprises information on an application priority corresponding to each of the plurality of resource pool; and
the determining a resource pool corresponding to a first terminal device according to the resource pool allocation information comprises:
determining a resource pool corresponding to an application priority of the first terminal device according to the resource pool allocation information.

22. The method according to claim 19, wherein the association information comprises information on a terminal device corresponding to each of the plurality of resource pools.

23. The method according to any one of claims 19 to 22, wherein the method further comprises:
receiving resource pool adjustment information sent by the network device, wherein the resource pool adjustment information is used to indicate an adjustment of the resource pool corresponding to the first terminal device; and
determining a resource pool corresponding to the first terminal device according to the resource pool adjustment information.

24. A network device, comprising:
a processing module, configured to determine resource pool allocation information, wherein the resource pool allocation information comprises resource information and association information of each of a plurality of resource pools of contention-based access resources; and
a transceiver module, configured to send the resource pool allocation information.

25. The network device according to claim 24, wherein the processing module is specifically configured to:
determine the resource pool allocation information according to a quality of service, QoS, level, wherein the association information comprises information on a QoS level corresponding to each of the plurality of resource pools.

26. The network device according to claim 25, wherein the processing module is further configured to adjust a part of resources in a second resource pool of the plurality of resource pools to a first resource pool of the plurality of resource pools, when resources in the first resource pool are insufficient, wherein a QoS level corresponding to the first resource pool is higher than a QoS level corresponding to the second resource pool; and
the transceiver module is further configured to send first resource pool adjustment information, wherein the first resource pool adjustment information is used to indicate an adjustment of the first resource pool and the second resource pool.

27. The network device according to claim 24, wherein the processing module is specifically configured to:
determine the resource pool allocation information according to an application priority, wherein the association information comprises information on an application priority corresponding to each of the plurality of resource pools.

28. The network device according to claim 27, wherein the processing module is further configured to adjust a part of resources in a fourth resource pool of the plurality of resource pools to a third resource pool of the plurality of resource pools, when resources in the third resource pool are insufficient, wherein an application priority corresponding to the third resource pool is higher than an application priority corresponding to the fourth resource pool; and
the transceiver module is further configured to send second resource pool adjustment information, wherein the second resource pool adjustment information is used to indicate an adjustment of the third resource pool and the fourth resource pool.

29. The network device according to claim 24, wherein the association information comprises information on a terminal device corresponding to each of the plurality of resource pools.

30. The network device according to claim 29, wherein the processing module is specifically configured to:
determining the resource pool allocation information according to received signal strength, wherein a difference between received signal strength corresponding to terminal devices corresponding to a same resource pool is within a predetermined range.

31. The network device according to claim 29, wherein the processing module is further configured to adjust a quantity of terminal devices corresponding to a fifth resource pool of the plurality of resource pools or adjust resources of the fifth resource pool according to a detection ratio corresponding to the fifth resource pool; and
the transceiver module is further configured to send third resource pool adjustment information, wherein the third resource pool adjustment information is used to indicate an adjustment of the fifth resource pool.

32. The network device according to claim 31, wherein the processing module is specifically configured to:
if the detection ratio corresponding to the fifth resource pool is lower than a first predetermined value, reduce the quantity of the terminal devices corresponding to the fifth resource pool or increase the resources of the fifth resource pool; or
if the detection ratio corresponding to the fifth resource pool is higher than a second predetermined value, increase the quantity of the terminal devices corresponding to the fifth resource pool or reduce the resources of the fifth resource pool.

33. The network device according to claim 29, wherein the processing module is further configured to adjust a resource pool corresponding to a first terminal device according to an interference condition experienced by the first terminal device; and
the transceiver module is further configured to send fourth resource pool adjustment information, wherein the fourth resource pool adjustment information is used to indicate an adjustment of the resource pool corresponding to the first terminal device.

34. The network device according to claim 33, wherein the processing module is specifically configured to:
if interference experienced by the first terminal device is greater than a third predetermined value, adjust the resource pool corresponding to the first terminal device or increase resources of the resource pool corresponding to the first terminal device.

35. The network device according to claim 33 or 34, wherein the transceiver module is further configured to receive the interference condition that is experienced by the first terminal device and sent by the first terminal device.

36. The network device according to claim 29, wherein the processing module is further configured to adjust a resource pool corresponding to a second terminal device according to data traffic of the second terminal device; and
the transceiver module is further configured to send fifth resource pool adjustment information, wherein the fifth resource pool adjustment information is used to indicate an adjustment of the resource pool corresponding to the second terminal device.

37. The network device according to claim 36, wherein the processing module is specifically configured to:
if the data traffic of the second terminal device is greater than a fourth predetermined value, adjust the resource pool corresponding to the second terminal device to a resource pool corresponding to a smaller quantity of terminal devices or increase resources of the resource pool corresponding to the second terminal device; or
if the data traffic of the second terminal device is less than a fifth predetermined value, adjust the resource pool corresponding to the second terminal device to a resource pool corresponding to a larger quantity of terminal devices or reduce the resources of the resource pool corresponding to the second terminal device.

38. The network device according to claim 29, wherein the processing module is further configured to adjust a resource pool corresponding to a third terminal device according to the number of attempted accesses of the third terminal device; and
the transceiver module is further configured to send sixth resource pool adjustment information, wherein the sixth resource pool adjustment information is used to indicate an adjustment of the resource pool corresponding to the third terminal device.

39. The network device according to claim 38, wherein the processing module is specifically configured to:
if the number of attempted accesses of the third terminal device is greater than a sixth predetermined value, adjust the resource pool corresponding to the third terminal device to a resource pool corresponding to a smaller quantity of terminal devices or increase resources of the resource pool corresponding to the third terminal device; or
if data traffic of the third terminal device is less than a seventh predetermined value, adjust the resource pool corresponding to the third terminal device to a resource pool corresponding to a larger quantity of terminal devices or reduce the resources of the resource pool corresponding to the third terminal device.

40. The network device according to claim 38 or 39, wherein the transceiver module is further configured to receive the number of attempted accesses of the third terminal device sent by the third terminal device.

41. The network device according to any one of claims 24 to 40, wherein the transceiver module is specifically configured to send the resource pool allocation information via broadcasting or high layer signaling.

42. A terminal device, comprising:
a transceiver module, configured to receive resource pool allocation information sent by a network device, wherein the resource pool allocation information comprises resource information and association information of each of a plurality of resource pools of contention-based access resources; and
a processing module, configured to determine a resource pool corresponding to the terminal device according to the resource pool allocation information, and transmit data over resources in the resource pool corresponding to the terminal device.

43. The terminal device according to claim 42, wherein the association information comprises information on a quality of service, QoS, level corresponding to each of the plurality of resource pools; and
the processing module is specifically configured to determine a resource pool corresponding to a QoS level of the terminal device according to the resource pool allocation information.

44. The terminal device according to claim 42, wherein the association information comprises information on an application priority corresponding to each of the plurality of resource pool; and
the processing module is specifically configured to determine a resource pool corresponding to an application priority of the terminal device according to the resource pool allocation information.

45. The terminal device according to claim 42, wherein the association information comprises information on a terminal device corresponding to each of the plurality of resource pools.

46. The terminal device according to any one of claims 42 to 45, wherein the transceiver module is further configured to receive resource pool adjustment information sent by the network device, wherein the resource pool adjustment information is used to indicate an adjustment of the resource pool corresponding to the terminal device; and
the processing module is further configured to determine a resource pool corresponding to the terminal device according to the resource pool adjustment information.
